# EUROPÄISCHE PATENTSCHRIFT

(11) **EP 2 526 135 B1**
(45) Veröffentlichungstag und Bekanntmachung des Hinweises auf die Patenterteilung: **18.03.2020**
(21) Anmeldenummer: 10788325.8
(22) Anmeldetag: 08.12.2010
(51) Int. Cl.: C08F 220/18, C08F 220/28, C10M 145/10

(54) **(METH)ACRYLAT-POLYMER ZUR VERBESSERUNG DES VISKOSITÄTSINDEXES**
(METH)ACRYLATE POLYMERS FOR IMPROVING THE VISCOSITY INDEX
POLYMÈRE DE MÉTH(ACRYLATE) POUR L'AMÉLIORATION DE L'INDICE DE VISCOSITÉ

(30) Priorität: 20.01.2010 DE 102010001040
(43) Veröffentlichungstag der Anmeldung: 28.11.2012
(73) Patentinhaber: Evonik Operations GmbH, 45128 Essen (DE)
(72) Erfinder: KOSCHABEK, Rene, 69469 Weinheim (DE); KÜNZEL, Sandra, 64853 Otzberg (DE); WEBER, Markus, 64395 Brensbach (DE); BARTELS, Thorsten, 67256 Weisenheim (DE); WINCIERZ, Christoph, 64285 Darmstadt (DE)
(74) Vertreter: Evonik Patent Association
(86) Internationale Anmeldenummer: PCT/EP2010/069113
(87) Internationale Veröffentlichungsnummer: WO 2011/088929

(56) Entgegenhaltungen:
- DE-A1- 19 838 851
- US-A- 3 052 648
- US-A- 3 251 775
- LEE J H ET AL: "Surface properties of copolymers of alkyl methacrylates with, methoxy (polyethylene oxide) metiiacrylates and their application as protein-resistant coatings", BIOMATERIALS, ELSEVIER SCIENCE PUBLISHERS BV., BARKING, GB, vol. 11, no. 7, 1 September 1990 (1990-09-01), pages 455-464, XP024142334, ISSN: 0142-9612, DOI: 10.1016/0142-9612(90)90058-X [retrieved on 1990-09-01]

## Beschreibung

Die vorliegende Erfindung betrifft (Meth)acrylat-Polymere zur Verbesserung des Viskositätsindexes. Darüber hinaus beschreibt die vorliegende Erfindung Schmierölzusammensetzungen, die diese (Meth)acrylatPolymere enthalten.

Die Verwendung von synthetischen Grundölen für Schmieröle ist Stand der Technik. Die Vorteile von synthetischen Ölen sind an sich bekannt. Beispielweise lassen sich viskosimetrische Eigenschaften von Ölen durch gezielte Synthese derselben an vorgegebene Anforderungen anpassen. Schon 1931 wird von Schmierstoffen berichtet (A. W. Neely, R. V. Shankland, F. W. Sullivan, N. N. Vorhees, Ind. Eng. Chem., 1931, 23, s. 604), die auf katalytische Polymerisierung von Olefinen basieren und besonders gute Stockpunkte aufweisen.

Neben den erwähnten Polyolefinen haben im Laufe der Zeit weitere synthetische Öle Verwendung im Schmierstoffbereich gefunden. Zu nennen sind hier Esteröle wie z.B. Adipate, alkylierte Aromaten, Phosphatester, Siloxane und Polyalkylenglykole (PAG).

Aufgrund ihrer hohen Polarität und ihrer Unbrennbarkeit fanden PAG zunächst Anwendung in Wasser-basierten Hydraulikflüssigkeiten von Militärflugzeugen im 2. Weltkrieg (W. H. Millett, Iron Stell Eng., 41, 1948).

Später wurden PAG u. a. als Schmierstoffe für Flugzeugmotoren eingesetzt (B. Rubin, E. M. Glass, SAE Q. Trans., 4, 287, 1950). Von Vorteil waren hier insbesondere die hervorragenden Tieftemperatureigenschaften der PAG wie z.B. Stockpunkte von < -50°C.

Als weitere wünschenswerte Eigenschaften von PAG sind zu nennen: geringe Neigung zur Bildung von Ölrückständen ("Sludge") und Ruß, rückstandslose Verbrennung, hohe Verträglichkeit mit Gummi und Elastomeren (Dichtungsverträglichkeit), gute Lösungseigenschaften. Des Weitern verleiht ihre hohe Polarität den PAG eine hohe Affinität zu Metalloberflächen, so dass der Schmierfilm selbst bei hohen Belastungen intakt bleibt.

Aus diesen Gründen wurden PAG auch als Schmierstoffe für Automobilmotoren eingesetzt. Die Eignung für diese Anwendung konnte durch mehr als 2 Mio Testmeilen bewiesen werden (J. M. Russ, Lubri. Eng., 151, 1946). Aufgrund von ökonomischen Gesichtspunkten und niedrigen technologischen Anforderungen konnten sich die PAG hier allerdings nicht durchsetzen.

In Zeiten abnehmender Welterdölreserven, Umweltbewusstsein und vor allem erweiterten technischen Anforderungsprofilen an Schmierstoffe verstärkt sich das Interesse an synthetischen Grundölen.

Für die Anwendung von Polyalkylenglykolen als Schmierstoffbasisöle ist die Viskosität ein entscheidendes Kriterium. Deshalb erfolgt die Einteilung von Basisölen für Schmierstoffe in so genannte ISO-VG-Klassen (Viskositätsklasse nach DIN 51519).

Viskositätsindexverbesserer (VII) sind meist polymere Additive, die in der Lage sind, den Viskositätsabfall bei steigender Öltemperatur abzumildern. Die in üblichen, auf Mineralöl basierenden Schmierölen zur Verbesserung des Viskositätsindexes eingesetzten Polymere gehören unterschiedlichen Klassen an. Zu nennen sind hier Olefin-Copolymere, Polyisobuten, Styrol-Maleinsäureanhydrid-Copolymere, Polyisopren, Polyalkylacrylate undmethacrylate. Beim Einsatz von PAG als Grundöl können herkömmliche VII auf Grund deren geringer Löslichkeit im Allgemeinen nicht eingesetzt werden.

Polymere mit Wiederholungseinheiten, die Polyalkylenglykolgruppen umfassen, sind aus dem Stand der Technik bekannt. Allerdings umfassen diese Polymere relativ geringe Anteile an diesen Wiederholungseinheiten.

Beispielsweise beschreiben die Dokumente US 2,892,820 und US 3,277,157 Mineralöl-lösliche PAMA mit Seitenketten basierend auf Polyethylenglykol. Durch den Einsatz von PAMA mit Polyalklenglykol-Seitenketten zeigen die modifizierten Polymere detergierende und dispergierende Eigenschaften, wobei diese durch verminderte lackartige Anhaftungen an Zylindern bestimmbar sind. Ähnliche Eigenschaften derartiger Polymere werden in den Druckschriften EP 418 610 A1 und EP 542 111 A2 dargelegt. Weiterhin sind Demulgatoren auf Basis von Polyalkyl(meth)acrylat-Copolymeren aus DE 198 03 696 A1 bekannt.

Die Verwendung von Polyalkyl(meth)acrylat-Copolymeren mit Polyalkylenglykol-Seitengruppen zur Verbesserung des Viskositätsindexes von Schmierölzusammensetzungen, die mindestens ein polares Grundöl umfassen, wird in den zuvor dargelegten Druckschriften nicht beschrieben.

In Anbetracht des Standes der Technik war es nun Aufgabe der vorliegenden Erfindung, ein Additiv zur Verfügung zu stellen, das zu einer Verbesserung des Viskositätsindexes von Schmierölzusammensetzungen führt, die mindestens ein polares Grundöl umfassen. Diese Verbesserung sollte insbesondere bei Schmierölzusammensetzungen erzielt werden, die mindestens ein Polyalkylenglykol umfassen.

Darüber hinaus war es mithin eine Aufgabe der vorliegenden Erfindung, ein Additiv zur Verfügung zu stellen, das mit einer sehr hohen Effizienz zu einer Verbesserung des Viskositätsindexes führt. Dementsprechend sollte eine möglichst geringe Zugabe an Additiv notwendig sein, um eine Verdickung des polaren Grundöls auf einen normgerechten Wert zu erzielen. Hierbei sollte der Viskositätsabfall bei steigender Öltemperatur auch bei sehr geringen Mengen an Additiv spürbar vermindert werden können.

Weiterhin war es eine Aufgabe der vorliegenden Erfindung ein Additiv bereitzustellen, welches eine gute Dispergiereigenschaft aufweist. Darüber hinaus sollte das Additiv eine hohe Verträglichkeit mit Gummi und Elastomeren (Dichtungsverträglichkeit) zeigen, so dass diese Komponenten nicht durch das Additiv angegriffen werden. Ähnlich sollte das Additiv die weiteren wünschenswerten Eigenschaften des Schmieröls nicht nachteilig beeinflussen. So sollte das Additiv die hohe Affinität zu Metalloberflächen des polaren Grundöls nicht beeinträchtigen, so dass der Schmierfilm selbst bei hohen Belastungen intakt bleibt.

Eine weitere Aufgabe der Erfindung bestand darin, Additive bereitzustellen, die einfach und kostengünstig hergestellt werden können, wobei insbesondere kommerziell erhältliche Komponenten eingesetzt werden sollten. Hierbei sollte die Produktion großtechnisch erfolgen können, ohne dass hierzu neue oder konstruktiv aufwendige Anlagen benötigt werden.

Des Weiteren war es ein Ziel der vorliegenden Erfindung ein Additiv bereitzustellen, das eine Vielzahl von wünschenswerten Eigenschaften in der Schmierölzusammensetzung bewirkt. Hierdurch kann die Anzahl an unterschiedlichen Additiven minimiert werden. So sollten bevorzugte Additive insbesondere dispergierende Wirkungen zeigen.

Weiterhin sollte das Additiv keine nachteiligen Wirkungen auf die Umweltverträglichkeit des Grundöls zeigen.

Ferner sollten die Additive eine besonders lange Haltbarkeit und einen geringen Abbau während des Einsatzes zeigen, so dass entsprechend modifizierte Schmierölzusammensetzungen über einen langen Zeitraum eingesetzt werden können.

Gelöst werden diese sowie weitere nicht explizit genannten Aufgaben, die jedoch aus den hierin einleitend diskutierten Zusammenhängen ohne weiteres ableitbar oder erschließbar sind, durch (Meth)acrylat-Polymere zur Verbesserung des Viskositätsindexes mit allen Merkmalen des Patentanspruchs 1. Zweckmäßige Abwandlungen der erfindungsgemäßen (Meth)acrylat-Polymere werden in den rückbezogenen Unteransprüchen unter Schutz gestellt. Hinsichtlich der Schmierölzusammensetzungen, der besonderen Verwendung von erfindungsgemäßen (Meth)acrylat-Polymeren und bevorzugter Verfahren zur Herstellung derselben liefern die Ansprüche 3, 7, 8 und 9 eine Lösung der zugrunde liegenden Aufgaben.

Gegenstand der vorliegenden Erfindung ist dementsprechend ein (Meth)acrylat-Polymer zur Verbesserung des Viskositätsindexes, bestehend aus den folgenden Zusammensetzungen:
(1) 45,0 Gew.-% Dodecyl-Pentadecylmethacrylat, 25,0 Gew.-% Methacrylsäuremethylester und 30,0 Gew.-% 2-[2-(2-Ethoxyethoxy)ethoxy]ethyl methacrylat, M_{w} = 69800 g/mol (GPC);
(2) 35,0 Gew.-% Dodecyl-Pentadecylmethacrylat, 25,0 Gew.-% Methacrylsäuremethylester und 40,0 Gew.-% 2-[2-(2-Ethoxyethoxy)ethoxy]ethyl methacrylat, M_{w} = 77500 g/mol (GPC);
(3) 15,0 Gew.-% Dodecyl-Pentadecylmethacrylat, 25,0 Gew.-% Methacrylsäuremethylester und 60,0 Gew.-% 2-[2-(2-Ethoxyethoxy)ethoxy]ethyl methacrylat, M_{w} = 77800 g/mol (GPC);
(4) 41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 3-Dimethylaminopropyl methacrylat, M_{w} = 69800 g/mol (GPC);
(5) 41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-Dimethylaminoethyl methacrylat, M_{w} = 61200 g/mol (GPC);
(6) 41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-(4-Morpholinyl)ethyl methacrylat, M_{w} = 60400 g/mol (GPC);
(7) 41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-(3-Oxazolidinyl)ethyl methacrylat, M_{w} = 78200 g/mol (GPC);
(8) 41,5 Gew.-% Dodecyl-Pentadecylmethacrylat, 25,0 Gew.-% Methacrylsäuremethylester und 33,5 Gew.-% 2-[2-(2-Ethoxyethoxy)ethoxy]ethyl methacrylat, M_{w} = 79000 g/mol (GPC);
(9) 35,0 Gew.-% Dodecyl-Pentadecylmethacrylat, 5,0 Gew.-% Methacrylsäuremethylester und 60,0 Gew.-% 2-[2-(2-Ethoxyethoxy)ethoxy]ethyl methacrylat, M_{w} = 83900 g/mol (GPC);
(10) 65,0 Gew.-% Dodecyl-Pentadecylmethacrylat, 5,0 Gew.-% Methacrylsäuremethylester und 30,0 Gew.-% 2-[2-(2-Ethoxyethoxy)ethoxy]ethyl methacrylat, M_{w} = 67000 g/mol (GPC); und
(11) 53,3 Gew.-% Dodecyl-Pentadecylmethacrylat, 24,2 Gew.-% Methacrylsäuremethylester, 19,4 Gew.-% 2-[2-(2-Ethoxyethoxy)ethoxy]ethyl methacrylat und 3,1 Gew.-% N-vinyl-2-pyrrolidon.

Bevorzugte Meth)acrylat-Polymere bestehen aus den folgenden Zusammensetzungen:
41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 3-Dimethylaminopropyl methacrylat, M_{w} = 69800 g/mol (GPC);
41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-Dimethylaminoethyl methacrylat, M_{w} = 61200 g/mol (GPC);
41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-(4-Morpholinyl)ethyl methacrylat, M_{w} = 60400 g/mol (GPC);
41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-(3-Oxazolidinyl)ethyl methacrylat, M_{w} = 78200 g/mol (GPC); und
53,3 Gew.-% Dodecyl-Pentadecylmethacrylat, 24,2 Gew.-% Methacrylsäuremethylester, 19,4 Gew.-% 2-[2-(2-Ethoxyethoxy)ethoxy]ethyl methacrylat und 3,1 Gew.-% N-vinyl-2-pyrrolidon.

Hierdurch gelingt es auf nicht vorhersehbare Weise ein Additiv zur Verfügung zu stellen, das mit einer sehr hohen Effizienz zu einer Verbesserung des Viskositätsindexes führt. Dementsprechend führt eine relativ geringe Zugabe an Additiv zu einer Verdickung des polaren Grundöls auf einen normgerechten Wert. Hierbei kann der Viskositätsabfall bei steigender Öltemperatur auch bei sehr geringen Mengen an Additiv spürbar vermindert werden.

Gemäß einer bevorzugten Ausführungsform des (Meth)acrylat-Polymers zur Verbesserung des Viskositätsindexes wird ein Additiv bereitgestellt, welches eine gute Dispergiereigenschaft aufweist. Darüber hinaus zeigt das (Meth)acrylat-Polymer zur Verbesserung des Viskositätsindexes eine hohe Verträglichkeit mit Gummi und Elastomeren (Dichtungsverträglichkeit), so dass diese Komponenten nicht durch das Additiv angegriffen werden. Ähnlich beeinflusst das Additiv die weiteren wünschenswerten Eigenschaften des Schmieröls nicht nachteilig. So beeinträchtigt das (Meth)acrylat-Polymer zur Verbesserung des Viskositätsindexes die hohe Affinität zu Metalloberflächen des polaren Grundöls nicht, so dass der Schmierfilm selbst bei hohen Belastungen intakt bleibt.

Des Weiteren können die (Meth)acrylat-Polymere zur Verbesserung des Viskositätsindexes einfach und kostengünstig hergestellt werden, wobei insbesondere kommerziell erhältliche Komponenten eingesetzt werden können. Hierbei kann die Produktion großtechnisch erfolgen, ohne dass hierzu neue oder konstruktiv aufwendige Anlagen benötigt werden.

Des Weiteren kann das (Meth)acrylat-Polymer zur Verbesserung des Viskositätsindexes eine Vielzahl von wünschenswerten Eigenschaften in der Schmierölzusammensetzung bewirken. Hierdurch kann die Anzahl an unterschiedlichen Additiven minimiert werden. So können bevorzugte Additive insbesondere dispergierende Wirkungen zeigen.

Weiterhin zeigt das (Meth)acrylat-Polymer zur Verbesserung des Viskositätsindexes keine nachteiligen Wirkungen auf die Umweltverträglichkeit des Grundöls.

Ferner zeigen die (Meth)acrylat-Polymere zur Verbesserung des Viskositätsindexes eine besonders lange Haltbarkeit und einen geringen Abbau während des Einsatzes zeigen, so dass entsprechend modifizierte Schmierölzusammensetzungen über einen langen Zeitraum eingesetzt werden können.

Die vorliegenden (Meth)acrylat-Polymere können vorzugsweise über radikalische Polymerisation von Monomeren erhalten werden, wobei die später dargelegten ATRP-, RAFT- und NMP-Verfahren im Rahmen der Erfindung zu den radikalischen Verfahren zu zählen sind, ohne dass hierdurch eine Beschränkung erfolgen soll. Hierbei werden Doppelbindungen unter Bildung von kovalenten Bindungen geöffnet. Dementsprechend ergibt sich die Wiederholungseinheit aus den eingesetzten Monomeren. Zur Bestimmung des Gewichtsanteils können üblich Endgruppen oder Startgruppen vernachlässigt werden. Dementsprechend ergibt sich der Gewichtsanteil an den jeweiligen Wiederholungseinheiten, die diese Polymere aufweisen, aus den zur Herstellung der Polymere eingesetzten Gewichtsanteilen an entsprechenden Monomeren.

Die Herstellung von 2-[2-(2-Ethoxyethoxy)ethoxy]ethyl methacrylat ist unter anderem in WO 2006/024538 und WO 2005/000929 dargelegt, wobei zu Zwecken der Offenbarung auf diese Druckschriften verwiesen wird und die darin beschriebenen Polyalkylenglykolmono(meth)acrylate und Verfahren zu deren Herstellung in die vorliegende Anmeldung eingefügt werden. So können Polyalkylenglykolmono(meth)acrylate mit einer Hydroxygruppe durch Umsetzung von (Meth)acrylsäure mit Epoxiden erhalten werden. Weiterhin können Polyalkylenglykolmono(meth)acrylate durch Umesterung von Alkyl(meth)acrylaten mit Alkoxypolyalkylenglykolen, insbesondere Methoxypolyalkylenglykolen erhalten werden. Das erfindungsgemäß verwendete 2-[2-(2-Ethoxyethoxy)ethoxy]ethylmethacrylat entspricht Ethyltriglycolmethacrylat mit der CAS-Nr. 39670-09-2, welches von Evonik Röhm GmbH unter der Handelsbezeichnung VISIOMER® ETMA kommerziell erworben werden kann.

Die zuvor genannten ethylenisch ungesättigten Monomere können einzeln oder als Mischungen eingesetzt werden. Es ist des Weiteren möglich, die Monomerzusammensetzung während der Polymerisation der Hauptkette zu variieren, um definierte Strukturen, wie beispielsweise Blockcopolymere oder Pfropfpolymere, zu erhalten.

Das zahlengemittelte Molekulargewicht Mₙ des (Meth)acrylat-Polymers kann vorzugsweise im Bereich von 5 000 bis 800 000 g/mol, besonders bevorzugt 8 000 bis 200 000 g/mol und ganz besonders bevorzugt 30 000 bis 100 000 g/mol liegen.

Zweckmäßig sind darüber hinaus (Meth)acrylat-Polymere, deren Polydispersitätsindex M_{w}/Mₙ im Bereich von 1 bis 5, besonders bevorzugt im Bereich von 2,5 bis 4,5 liegt. Das zahlengemittelte und das gewichtsgemittelte Molekulargewicht können durch bekannte Verfahren, beispielsweise die Gelpermeationschromatographie (GPC) bestimmt werden. Dieses Verfahren wird ausführlich in WO 2007/025837 und in WO 2007/03238 beschrieben, wobei die darin dargelegten Verfahren zur Bestimmung des Molekulargewichts zu Zwecken der Offenbarung in diese Anmeldung eingefügt werden.

Die erfindungsgemäßen Polymere können auf verschiedene Weise hergestellt werden. Ein bevorzugtes Verfahren besteht in der an sich bekannten radikalischen Copolymerisation der genannten Monomere.

So können diese Polymere insbesondere durch radikalische Polymerisation, sowie verwandte Verfahren der kontrollierten radikalischen Polymerisation, wie beispielsweise ATRP (=Atom Transfer Radical Polymerisation) NMP (Nitroxide-mediated Polymerisation) oder RAFT (=Reversible Addition Fragmentation Chain Transfer) erhalten werden.

Die übliche freie radikalische Polymerisation ist u.a. in Ullmanns's Encyclopedia of Industrial Chemistry, Sixth Edition dargelegt. Im Allgemeinen werden hierzu ein Polymerisationsinitiator sowie gegebenenfalls ein Kettenüberträger eingesetzt.
Zu den verwendbaren Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können. Als Kettenüberträger eignen sich insbesondere öllösliche Mercaptane wie beispielsweise n-Dodecylmercaptan oder 2-Mercaptoethanol oder auch Kettenüberträger aus der Klasse der Terpene, wie beispielsweise Terpinolen.

Das ATRP-Verfahren ist an sich bekannt. Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Dementsprechend kann der Aufbau des Polymeren, das Molekulargewicht und die Molekulargewichtsverteilung gesteuert werden.

Diese Reaktionsführung wird beispielsweise von J-S. Wang, et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Des Weiteren können die erfindungsgemäßen Polymere beispielsweise auch über RAFT-Methoden erhalten werden. Dieses Verfahren ist beispielsweise in WO 98/01478 und WO 2004/083169 ausführlich dargestellt.

Die Polymerisation kann bei Normaldruck, Unter- od. Überdruck durchgeführt werden. Auch die Polymerisationstemperatur ist unkritisch. Im Allgemeinen liegt sie jedoch im Bereich von -20° - 200°C, vorzugsweise 50° - 150°C und besonders bevorzugt 80° - 130°C.

Die Polymerisation kann mit oder ohne Lösungsmittel durchgeführt werden. Der Begriff des Lösungsmittels ist hierbei weit zu verstehen. Die Auswahl des Lösungsmittels erfolgt nach der Polarität der eingesetzten Monomeren, wobei insbesondere Esteröle bevorzugt sind. Zu den Esterölen zählen insbesondere Esterverbindungen, die von Carbonsäuren und/oder Phosphorsäuren abgeleitet sind.

Zu den von Phosphorverbindungen abgeleiteten Esterölen zählen insbesondere Alkylarylphosphatester; Trialkylphosphate, wie z.B. Tributylphosphat oder Tri-2-ethylhexylphosphat; Triarylphosphate, wie z.B. gemischte Isopropylphenylphosphate, gemischte t-Butylphenylphosphate, Trixylenylphosphat, oder Tricresylphosphat. Weitere Klassen von organischen Phosphorverbindungen, die als Lösungsmittel eingesetzt werden können, umfassen Phosphonate und Phosphinate, welche Alkyl und/oder Aryl-Substituenten umfassen können. Dialkylphosphonate beispielsweise Di-2-ethylhexylphosphonat; Alkyl hosphinate beispielsweise Di-2-ethylhexylphosphinat können als Grundöl eingesetzt werden. Bevorzugte Alkylgruppen umfassen lineare oder verzweigte Kohlenstoffketten mit 1 bis 10 Kohlenstoffatomen. Hinsichtlich der Arylgruppen sind Reste mit 6 bis 10 Kohlenstoffatomen bevorzugt, die 6 to 10 Kohlenstoffatome umfassen, wobei diese mit Alkylgruppen substituiert sein können.

Weiterhin können Lösungsmittel eingesetzt werden, die auf Carbonsäureestern basieren. Diese Carbonsäureester sind üblich Reaktionsprodukte von Alkoholen, wie z.B. einwertigen oder mehrwertigen Alkoholen, und Carbonsäuren wie z.B. einwertigen oder mehrwertigen Carbonsäuren. Hierbei können auch partielle Carbonsäureester eingesetzt werden.

Carbonsäureester können eine Carbonsäureestergruppe mit der Formel R-COO-R aufweisen, worin R unabhängig eine Gruppe mit 1 bis 40 Kohlenstoffatome ist. Bevorzugte Esterverbindungen umfassen mindestens zwei Estergruppen. Diese Verbindungen können auf Polycarbonsäuren mit mindestens zwei Säuregruppen und/oder Polyolen mit mindestens zwei Hydroxylgruppen basieren.

Bevorzugte Polycarbonsäurereste können 2 bis 40, bevorzugt 4 to 24, insbesondere bevorzugt 4 to 12 Kohlenstoffatome umfassen. Zweckmäßige Polycarbonsäureester sind beispielsweise Ester der Adipin-, Azelain-, Sebacin-, Phthal- und/oder Dodecan-Säuren. Die Alkoholkomponenten der Polycarbonsäureester umfassen vorzugsweise 1 to 20, bevorzugt 2 to 10 Kohlenstoffatome.

Beispiele zweckmäßiger Alkohole zur Herstellung der zuvor dargelegten Ester sind Methanol, Ethanol, Propanol, Butanol, Pentanol, Hexanol, Heptanol Octanol, Nonanol, Decanol, Undecanol und Dodecanol.

Gemäß einer bevorzugten Ausführungsform werden Verbindungen eingesetzt, die von Polycarbonsäuren und Alkoholen mit genau einer Hydroxylgruppe abgeleitet sind. Beispiele dieser Verbindungen sind unter anderem in Ullmanns Encyclopädie der Technischen Chemie, 3. Aufl., Bd. 15, Seiten 287 -292, Urban & Schwarzenber (1964)) dargelegt.

Zweckmäßige Polyole zur Herstellung der Esterverbindungen mit mindestens zwei Estergruppen enthalten üblich 2 bis 40, vorzugsweise 4 bis 22 Kohlenstoffatome. Beispiele sind Neopentylglycol, Diethylenglycol, Dipropylenglycol, 2,2-Dimethyl-3-hydroxypropyl-2',2'-dimethyl-3'-hydroxypropionat, Glycerin, Trimethylolethan, Trimethanolpropan, Trimethylolnonan, Ditrimethylolpropan, Pentaerythritol, Sorbit, Mannit und Dipentaerythritol. Die Carbonsäurekomponente des Polyesters kann 1 bis 40, vorzugsweise 2 bis 24 Kohlenstoffatome enthalten. Beispiele sind lineare oder verzweigte gesättigte Carbonsäuren, wie z.B. Ameisensäure, Essigsäure, Propionsäure, Octansäure, Capronsäure, Enanthsäure, Caprylsäure, Pelargonsäure, Caprinsäure, Undecansäure, Laurinsäure, Tridecansäure, Myristinsäure, Pentadecansäure, Palmitinsäure, Heptadecansäure, Stearinsäure, Nonadecansäure, Arachinsäure, Behensäure, Isomyristinsäure, Isopalmitinsäure, Isostearinsäure, 2,2-Dimethylbutansäure, 2,2-Dimethylpentansäure, 2,2-Dimethyloctansäure, 2-Ethyl-2.3,3-trimethylbutansäure, 2,2,3,4-Tetramethylpentansäure, 2,5,5-Trimethyl-2-t-butylhexansäure, 2,3,3-Trimethyl-2-ethylbutansäure, 2,3-Dimethyl-2-isopropylbutansäure, 2-Ethylhexansäure, 3,5,5-Trimethylhexansäure; lineare oder verzweigte ungesättigte Carbonsäuren, wie beispielsweise Linolsäure, Linolensäure, 9-Octadecensäure, Undecensäure, Elaidinsäure, Eicosapentaensäure, Erucasäure, Brassidinsäure und Ölsäure. Diese Säuren können in einer Vielzahl von Reinheitsgraden kommerziell erhalten werden.

Fettsäuremischungen, wie z.B. Tallölfettsäuren können ebenfalls eingesetzt werden.

Besonders bevorzugte Esterverbindungen mit mindestens zwei Estergruppen sind unter anderem Diisononyladipat, Neopentylglycoltallat, Neopentylglycoldioleat, Propylenglycoltallat, propylenglycoldioleat, Diethylenglycoltallat und Diethylenglycoldioleat. Als Tallate werden hierbei Ester verstanden, die von Tallölfettsäuremischungen abgeleitet sind.

Viele dieser Verbindungen können kommerziell von BASF unter der Handelsbezeichnung ®Plastomoll DNA, von Inolex Chemical Co. unter der Handelsbezeichnung ®Lexolube 2G-214, from Cognis Corp. unter der Handelsbezeichnung ®ProEco 2965, von Uniqema Corp. unter der Handelsbezeichnung ®Priolube 1430 und ®Priolube 1446 und von Georgia Pacific unter der Handelsbezeichnung ®Xtolube 1301 und ®Xtolube 1320 erhalten werden.

Die zur Herstellung der erfindungsgemäßen Polymeren in einer radikalischen Copolymerisation einzusetzenden Monomeren sind im Allgemeinen kommerziell erhältlich.

Die erfindungsgemäßen (Meth)acrylat-Polymere werden insbesondere zur Verbesserung des Viskositätsindexes von Schmierölformulierungen eingesetzt, die insbesondere auf polaren Grundölen basieren. Polare Grundöle umfassen üblich Verbindungen mit polaren Gruppen, insbesondere Estergruppen und/oder Ethergruppen.

Zu diesen polaren Grundölen gehören unter anderem organische Ester, beispielsweise Diester und Polyester von Carbonsäuren, wie z.B. Adipate, Phosphatester, Polyalkylenglykole, Polyether und Silikonöle.

Zu den bevorzugten polaren Grundölen gehören insbesondere die zuvor dargelegten Esteröle, die vorzugsweise Phosphorester und/oder Carbonsäureester umfassen. Weiterhin können Esteröle eingesetzt werden, die durch Polymerisation von (Meth)acrylaten erhältlich sind. Hierzu gehören unter anderem die in EP-0 471 266 A1 dargelegten Syntheseöle, wobei die in EP-0 471 266 A1 dargelegten, auf (Meth)acrylaten basierenden Öle zu Zwecken der Offenbarung in die vorliegende Anmeldung durch Referenz eingefügt werden. Diese Öle sind kommerziell unter der Bezeichnung ®Viscobase von Evonik RohMax GmbH erhältlich.

Besonders überraschend können die vorliegenden (Meth)acrylat-Polymere zur Verbesserung des Viskositätsverhaltens von Polyalkylenglykolen eingesetzt werden. Polyalkylenglykole sind in der Fachwelt bekannt, wobei diese Polyether im Allgemeinen durch anionische ringöffnende Polymerisation von Alkylenoxiden (Ethylenoxid, Propylenoxid, Butylenoxid etc.) mit einem Initiator wie z.B. einem Alkohol erhalten werden können (Ullmann Enzyclopedia of Industrial Chemistry 5. ed VCH, ISBN 3-527-20100-9). Als Katalysatoren der anionischen Polymerisation der Alkylenoxide werden dabei im allgemeinen Alkalihydroxide wie Kalium- oder Natriumhydroxid eingesetzt.

Die Verwendung und Erfordernisse dieser Polyalkylenglykole als Basisöle zur Formulierung von Schmierstoffen ist zum Beispiel in den FDA-Regulatorien 21 CFR 178.3910 (Surface lubricants used in manufacture of metallic articles) oder 21 CFR 173.340, 21 CFR 178.3570 (lubricants with incidental food contact) beschrieben. Die Charakterisierung von Polyalkylenglykolbasisölen erfolgt über deren Viskosität, ihre mittlere Molmasse sowie Molmassenverteilung und das Verhältnis der eingebauten Alkylenoxidmonomere.

Für die Anwendung von Polyalkylenglykolen als Schmierstoffbasisöle ist die Viskosität ein entscheidendes Kriterium. Deshalb erfolgt die Einteilung von Basisölen für Schmierstoffe in so genannte ISO-VG-Klassen (Viskositätsklasse nach DIN 51519).

Erfindungsgemäß können Polyalkylen-Homopolymere, insbesondere Polyethylenglykol, Polypropylenglykol und/oder Polybutylenglykol, oder Polyalkylen-Copolymere, insbesondere Copolymere, die Ethylenglykol-, Propylenglykol- und/oder Butylenglykol-Einheiten enthalten, eingesetzt werden. Hierbei können sowohl statistische Copolymere als auch Blockcopolymere verwendet werden.

Das zahlengemittelte Molekulargewicht bevorzugter Polyalkylenglykole liegt vorzugsweise im Bereich von 200 bis 4000 g/mol, besonders bevorzugt im Bereich von 350 bis 2000 g/mol. Diese Werte können beispielsweise durch GPC oder, bei geringem Molekulargewicht, über Dampfdruckosmose bestimmt werden.

Weitere Einzelheiten von Polyalkylenglykolen, die insbesondere in Schmierölformulierungen eingesetzt werden können, sind insbesondere in Rudnik, L.R., Shubkin, R.L., Synthetic Lubricants and High-Performance Functional Fluids, 2nd Ed., 1999, Kapitel 6 und in Mang, Th., Dresel W., Lubricants and Lubrication, 2nd. Ed., 2007, Kapitel 5.3 beschrieben, wobei diese Druckschrift zu Zwecken der Offenbarung in diese Anmeldung durch Referenz eingefügt wird.

Als Schmieröl (Grundöl) können insbesondere Öle mit einer Viskosität im Bereich von 3 mm²/s bis 400 mm²/s, besonders bevorzugt 5 mm²/s bis 350 mm²/s gemessen bei 40°C nach ASTM 445 eingesetzt werden.

Diese Grundöle können auch als Mischungen eingesetzt werden und sind vielfach kommerziell erhältlich. So sind die zuvor dargelegten Polyalkylenglykole insbesondere von Clariant, von Dow unter der Bezeichnung ®Synalox und von Klüber Lubrication unter der Bezeichnung ®Klübersynth erhältlich.

Die Konzentration des (Meth)acrylat-Polymers in der Schmierölzusammensetzung liegt vorzugsweise im Bereich von 0,1 bis 40 Gew.-%, insbesondere bevorzugt im Bereich von 1 bis 30 Gew.-%, besonders bevorzugt im Bereich von 2 bis 25 Gew.-% und ganz besonders bevorzugt im Bereich von 5 - 20 Gew.-%, bezogen auf das Gesamtgewicht der Zusammensetzung.

Neben den zuvor genannten Komponenten kann eine Schmierölzusammensetzung weitere Additive und Zusatzstoffe enthalten. Zu diesen Additiven gehören unter anderem DI-Additive (Dispergiermittel, Detergentien, Entschäumer, Korrosionsinhibitoren, Antioxidationsmittel, Verschleißschutz- und Extremdruckadditive, Reibwertveränderer) und/oder Farbstoffe.

Bevorzugte Schmierölzusammensetzungen weisen eine gemäß ASTM D 445 bei 40°C gemessenen Viskosität KV₄₀ im Bereich von 10 bis 500 mm²/s, besonders bevorzugt im Bereich von 22 bis 200 mm²/s auf. Die bei 100°C gemessene kinematische Viskosität KV₁₀₀ beträgt vorzugsweise mindestens 6,5 mm²/s, besonders bevorzugt mindestens 7,5 mm²/s und ganz besonders bevorzugt mindestens 8,0 mm²/s.

Gemäß einem besonderen Aspekt der vorliegenden Erfindung weisen bevorzugte Schmierölzusammensetzungen einen gemäß ASTM D 2270 bestimmten Viskositätsindex im Bereich von 100 bis 400, besonders bevorzugt im Bereich 150 bis 350 und ganz besonders bevorzugt im Bereich von 175 bis 275 auf.

Die vorliegenden Schmierölzusammensetzungen können insbesondere als Getriebeöl, Motoröl oder Hydrauliköl eingesetzt werden. Überraschende Vorteile lassen sich insbesondere bei Verwendung der vorliegenden Schmiermittel in Handschalt- (*manual*), automatisierten Handschalt-(*automated manual*), Doppelkupplungs- (*double clutch*) bzw. Direktschaltgetrieben (DSG), Automatik- (*automatic*) und stufenlosen Getrieben (*continuous variable transmission* CVC) erzielen. Weiterhin können die vorliegenden Schmiermittel insbesondere in Verteilergetrieben (*transfer case*) und Achs- (*axle*) bzw. Differentialgetrieben (*differential*) eingesetzt werden.

Nachfolgend soll die vorliegende Erfindung anhand von Beispielen und Vergleichsbeispielen erläutert werden, ohne dass hierdurch eine Beschränkung erfolgen soll. Die in Prozent dargelegten Angaben beziehen sich auf das Gewicht, es sei denn anderes ist dargelegt.

### Abkürzungen

DPMA= Dodecyl-Pentadecylmethacrylat (hergestellt aus ®Neodol 25 E von Shell)
LIMA = Dodecyl-Pentadecylmethacrylat (hergestellt aus ®LIAL 125 von Sasol)
MMA= Methacrylsäuremethylester
ETGMA= 2-[2-(2-Ethoxyethoxy)ethoxy]ethyl methacrylat
NVP= N-vinyl-2-pyrrolidon
MAS= Methacrylsäure
DMAPMA= 3-Dimethylaminopropyl methacrylat
DMAEMA= 2-Dimethylaminoethyl methacrylat
MOEMA= 2-(4-Morpholinyl)ethyl methacrylat
OEMA= 2-(3-Oxazolidinyl)ethyl methacrylat

### Durchführung des Russ-Tüpfeltestes:

Zur Bestimmung der Dispersionswirkung der erhaltenen Polymere in dem entsprechenden Öl wurde ein Tüpfeltest durchgeführt, wie er zum Beispiel von A. Schilling in "Les Huiles pour Moteurs et le Graissage des Moteurs", Vol. 1, 1962, Seite 89 f. in etwas modifizierter Form beschrieben ist. Hierzu wurden in ein 150 ml Teflonbecher 1,5 g Russ (Flammruss, Degussa Spezialschwarz 4), 50 g Formulierung und anschließend 275 Stahlkugeln (d= 2 mm) gegeben. Die präparierten Proben wurden 15 min. mit einem Red Devil 5400 Farbmischer geschüttelt, dann über ein Schnellsieb (280 µm) filtriert. Danach werden von jeder Dispersionslösung 20 yl auf Filterpapier (589², white ribbon, ashless, d=90mm) getüpfelt. Nach 1 h Lagerung im Trockenschrank bei 80°C wurden die Proben ausgewertet. Zur Auswertung wurde der Durchmesser des Russfleckens d1 und der Durchmesser des ihn umgebenden Ölfleckens d2 ausgemessen und deren Verhältnis in % angegeben (Bewertung = d1/d2 ^{∗} 100 %). Je höher die Bewertung, d.h. je geringer der Durchmesser des umgebenden Ölfleckens in Bezug auf den Russfleck, desto besser die Dispergierwirkung. Die genannte Prozedur wurde zweimal durchgeführt.

Die Gesamtbewertung des Tüpfeltests ergibt sich als Summe von zwei Einzeltests. Produkte mit schlechter Russdispergierung ergeben somit niedrigerer Werte als solche Produkte mit guter Russdispergierwirkung.

### Beispiele 1 bis 10

In einen 2 L-Reaktionskolben einer Apparatur mit Säbelrührer, Kühler, Temperaturregler mit PT100, Zulaufpumpe und N₂-Zuleitung wurden 49,3 g einer Monomermischung, deren Zusammensetzung in Tabelle 1 dargelegt ist, und 444,0g ®Plastomoll DNA (Diisononyladipat; erhältlich von BASF) eingewogen. Die Apparatur wurde inertisiert und auf 100°C aufgeheizt. Weiterhin wurde ein Monomer/Initiator-Gemisch hergestellt, das 506,7 g einer Monomermischung, deren Zusammensetzung in Tabelle 1 dargelegt ist, und 9,4 g tert.-Butylper-2-ethylhexanoat umfasste. Nachdem das Gemisch im Reaktionskolben eine Temperatur von 100°C erreicht hatte, wurden 1,68 g tert.-Butylper-2-ethylhexanoat zugegeben, gleichzeitig der Zulauf des Monomer/Initiator-Gemisches mittels Pumpe gestartet. Die Zugabe erfolgte gleichmäßig über einen Zeitraum von 210 Minuten bei 100°C. 2 h nach Zulaufende wurden nochmals 1,1 g tert.-Butylper-2-ethylhexanoat zugegeben und weitere 2 h bei 100°C gerührt. Man erhielt eine 55,6%ige klare Lösung. Das mittels GPC erhaltene Gewichtsmittel der Molmasse des Polymers ist ebenfalls in Tabelle 1 dargelegt.

**Tabelle 1**

| | LIMA | MMA | ETGMA | DMAPMA | DMAEMA | MOEMA | OEMA | Mw |
|---|---|---|---|---|---|---|---|---|
| | [%] | [%] | [%] | [%] | [%] | [%] | [%] | (GPC) |
| Beispiel 1 | 45,0 | 25,0 | 30,0 | - | - | - | - | 69800 |
| Beispiel 2 | 35,0 | 25,0 | 40,0 | - | - | - | - | 77500 |
| Beispiel 3 | 15,0 | 25,0 | 60,0 | - | - | - | - | 77800 |
| Beispiel 4 | 41,5 | 25,0 | 30,0 | 3,5 | - | - | - | 69800 |
| Beispiel 5 | 41,5 | 25,0 | 30,0 | - | 3,5 | - | - | 61200 |
| Beispiel 6 | 41,5 | 25,0 | 30,0 | - | - | 3,5 | - | 60400 |
| Beispiel 7 | 41,5 | 25,0 | 30,0 | - | - | - | 3,5 | 78200 |
| Beispiel 8 | 41,5 | 25,0 | 33,5 | - | - | - | - | 79000 |
| Beispiel 9 | 35,0 | 5,0 | 60,0 | - | - | - | - | 83900 |
| Beispiel 10 | 65,0 | 5,0 | 30,0 | - | - | - | - | 67000 |

### Beispiel 11 und Vergleichsbeispiele 1 bis 4

In einen 2 L-Reaktionskolben einer Apparatur mit Säbelrührer, Kühler, Temperaturregler mit PT100, Zulaufpumpe und N₂-Zuleitung wurden 49,3 g einer Monomermischung, deren Zusammensetzung in Tabelle 2 dargelegt ist, und 444,0 g Plastomoll DNA eingewogen. Die Apparatur wurde inertisiert und auf 100°C aufgeheizt. Weiterhin wurde ein Monomer/Initiator-Gemisch hergestellt, das 506,7 g einer Monomermischung, deren Zusammensetzung in Tabelle 2 dargelegt ist, und 9,4 g tert.-Butylper-2-ethylhexanoat umfasste. Nachdem das Gemisch im Reaktionskolben eine Temperatur von 100°C erreicht hatte, wurden 1,68 g tert.-Butylper-2-ethylhexanoat zugegeben, gleichzeitig der Zulauf des Monomer/Initiator-Gemisches mittels Pumpe gestartet. Die Zugabe erfolgte gleichmäßig über einen Zeitraum von 210 Minuten bei 100°C. 2 h nach Zulaufende wurden nochmals 1,1 g tert.-Butylper-2-ethylhexanoat zugegeben und weitere 2 h bei 100°C gerührt. Man erhielt eine 55,6% ige klare Lösung. Diese wurde mit 17,8 g NVP und 14,2 g Plastomoll DNA versetzt und auf 130°C aufgeheizt. Nach erreichen der Temperatur wurden 1,4 g ter.-Butylperbenzoat zugegeben. 1, 2 und 3 h danach wurden nochmals 0,72 g ter.-Butylperbenzoat zugegeben. Nach der letzten Initiatorzugabe wurde noch 2 h bei 130°C gerührt. Man erhielt eine klare 55,6%ige Lösung. Die gemäß Brookfield erhaltene Viskosität (BV100) ist ebenfalls in Tabelle 2 dargelegt.

**Tabelle 2:**

| | DPMA [%] | MMA [%] | ETGMA [%] | NVP [%] | MAS | Styrol | BV 100 [mm²/s] |
|---|---|---|---|---|---|---|---|
| Beispiel 11 | 53,3 | 24,2 | 19,4 | 3,1 | - | - | 702 |
| Vergleichsbeispiel 1 | 72,7 | 24,2 | - | 3,1 | - | - | 520 |
| Vergleichsbeispiel 2 | 69,8 | 24,2 | - | 3,1 | 2,9 | - | 1454 |
| Vergleichsbeispiel 3 | 67,8 | 24,2 | - | 3,1 | 4,9 | - | 5940 |
| Vergleichsbeispiel 4 | 63,0 | 24,2 | - | 3,1 | - | 9,7 | 865 |

### Anwendungsbeispiele

Die Verbesserung des Viskositätsindexes durch die dargelegten Polymere wurden in Polyalkylenglycolen untersucht, wobei ein gering viskoses Polyalkylenöl (PAG 1: UCON 50-HB-55 von Dow Chemicals) und ein hoch viskoses Polyalkylenöl (PAG 2: SINALOX 50-S220 von Shell) verwendet wurden. Die erhaltenen Ergebnisse sind in Tabellen 3 und 4 dargelegt. Die Formulierungen wurden auf einen eine Viskosität von etwa 8 mm²/s bei 100°C eingestellt (ASTM D445). Es wurden die typischen Formulierungsgrößen KV40 (ASTM D445) und Viskositätsindex VI (ASTM 2270) bestimmt, die erhaltenen Werte können Tabelle 2 entnommen werden.

**Tabelle 3: Additivierung von PAG 1**

| Polymer gemäß | Zusatzmenge Polymer in % | KV100 [mm²/s] | KV40 [mm²/s] | VI |
|---|---|---|---|---|
| | - | 2,338 | 8,318 | 92 |
| Beispiel 1 | 21,1 | 8,075 | 30,81 | 254 |
| Beispiel 2 | 20,0 | 7,993 | 31,09 | 247 |
| Beispiel 3 | 20,0 | 7,916 | 29,58 | 285 |
| Beispiel 4 | 20,3 | 8,118 | 31,24 | 252 |
| Beispiel 5 | 22,0 | 8,027 | 31,21 | 248 |
| Beispiel 6 | 22,4 | 7,990 | 31,07 | 247 |
| Beispiel 7 | 20,9 | 8,238 | 31,99 | 250 |
| Beispiel 8 | 20,5 | 8,082 | 31,12 | 251 |
| Beispiel 9 | 23,0 | 8,059 | 30,52 | 257 |
| Beispiel 10 | 26,3 | 7,957 | 30,3 | 254 |
| Beispiel 11 | 16,0 | 7,965 | 29,38 | 264 |
| Vergleichsbeispiel 1 | nicht löslich | | | |
| Vergleichsbeispiel 2 | nicht löslich | | | |
| Vergleichsbeispiel 3 | nicht löslich | | | |
| Vergleichsbeispiel 4 | nicht löslich | | | |

Der Vergleich der Beispiele 1, 9 und 10 zeigt, dass durch die Verwendung von Methylmethacrylat die Verdickungswirkung der Polymere verbessert werden kann, so dass geringere Mengen an Polymer benötigt werden, um ein Grundöl auf eine bestimmte Viskosität einzustellen. Die vorliegenden Daten sind insbesondere überraschend, da lediglich eine Steigerung der Polarität des Polymeren durch Verwendung von Methacrylsäure nicht zu einer Bereitstellung von Additiven ausreicht, mit denen in polaren Grundölen eine Verbesserung des Viskositätsindexes erzielt werden kann.

**Tabelle 4: Additivierung von PAG 2**

| Polymer gemäß | Zusatzmenge Polymer in % | KV100 [mm²/s] | KV40 [mm²/s] | VI |
|---|---|---|---|---|
| - | - | 52,0 | 312,8 | 232 |
| Beispiel 3 | 10,0 | 65,9 | 398,5 | 241 |
| Beispiel 3 | 15,0 | 72,5 | 445,3 | 243 |

Aus den Tabellen 3 und 4 geht hervor, dass man durch Additivierung von PAG mittels den beschriebenen löslichen PAMA die Viskositätsindizes der PAGs signifikant anheben kann. Aufgrund des somit reduzierten Viskositätsabfalles bei ansteigenden Temperaturen kann der Temperatureinsatzbereich für PAG in Schmierstoffanwendungen erheblich erweitert werden.

Weiterhin wurde der zuvor dargelegte Russ-Tüpfeltest durchgeführt.

Tabelle 5 zeigt die Bewertung nach den Labordispergiertests für die dispergierenden VII (Beispiel 4-7 und 11) und zweier nicht-dispergierende VII (Beispiel 1 und 8). Die Versuche wurden anhand der in Tabelle 3 dargelegten Formulierungen durchgeführt. Die Polymere gemäß den Beispielen 4 bis 7 und 11 zeigen überraschend die

Eigenschaft den Russ sehr gut zu dispergieren. Dies macht sich nicht nur in insgesamt höheren Gesamtbewertungen beim Tüpfeltest bemerkbar, sondern auch im deutlich reduzierten Russ-bedingten Anstieg der Viskosität der Öle.

**Tabelle 5: Ergebnisse Russ-Dispergierung**

| Polymer gemäß | Bewertung 1. Tüpfelung [%] | Bewertung 2. Tüpfelung [%] | Gesamtbewertung [%] | KV 100°C [mm²/s] ASTM D445 |
|---|---|---|---|---|
| Beispiel 1 | 24,7 | 23,4 | 24,1 | 79,27 |
| Beispiel 4 | 83,9 | 86,5 | 85,2 | 15,59 |
| Beispiel 5 | 76,7 | 77,9 | 77,3 | 20,93 |
| Beispiel 6 | 43,9 | 45,3 | 44,6 | 35,40 |
| Beispiel 7 | 86,1 | 85,1 | 85,6 | 33,24 |
| Beispiel 8 | 24,1 | 22,6 | 23,4 | 70,70 |
| Beispiel 11 | 64,5 | 65,3 | 64,9 | 25,84 |

## Patentansprüche

1. (Meth)acrylat-Polymer zur Verbesserung des Viskositätsindexes, bestehend aus den folgenden Zusammensetzungen:
(1) 45,0 Gew.-% Dodecyl-Pentadecylmethacrylat, 25,0 Gew.-% Methacrylsäuremethylester und 30,0 Gew.-% 2-[2-(2-Ethoxyethoxy)ethoxy]ethyl methacrylat, M_{w} = 69800 g/mol (GPC);
(2) 35,0 Gew.-% Dodecyl-Pentadecylmethacrylat, 25,0 Gew.-% Methacrylsäuremethylester und 40,0 Gew.-% 2-[2-(2-Ethoxyethoxy)ethoxy]ethyl methacrylat, M_{w} = 77500 g/mol (GPC);
(3) 15,0 Gew.-% Dodecyl-Pentadecylmethacrylat, 25,0 Gew.-% Methacrylsäuremethylester und 60,0 Gew.-% 2-[2-(2-Ethoxyethoxy)ethoxy]ethyl methacrylat, M_{w} = 77800 g/mol (GPC);
(4) 41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 3-Dimethylaminopropyl methacrylat, M_{w} = 69800 g/mol (GPC);
(5) 41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-Dimethylaminoethyl methacrylat, M_{w} = 61200 g/mol (GPC);
(6) 41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-(4-Morpholinyl)ethyl methacrylat, M_{w} = 60400 g/mol (GPC);
(7) 41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-(3-Oxazolidinyl)ethyl methacrylat, M_{w} = 78200 g/mol (GPC);
(8) 41,5 Gew.-% Dodecyl-Pentadecylmethacrylat, 25,0 Gew.-% Methacrylsäuremethylester und 33,5 Gew.-% 2-[2-(2-Ethoxyethoxy)ethoxy]ethyl methacrylat, M_{w} = 79000 g/mol (GPC);
(9) 35,0 Gew.-% Dodecyl-Pentadecylmethacrylat, 5,0 Gew.-% Methacrylsäuremethylester und 60,0 Gew.-% 2-[2-(2-Ethoxyethoxy)ethoxy]ethyl methacrylat, M_{w} = 83900 g/mol (GPC);
(10) 65,0 Gew.-% Dodecyl-Pentadecylmethacrylat, 5,0 Gew.-% Methacrylsäuremethylester und 30,0 Gew.-% 2-[2-(2-Ethoxyethoxy)ethoxy]ethyl methacrylat, M_{w} = 67000 g/mol (GPC); und
(11) 53,3 Gew.-% Dodecyl-Pentadecylmethacrylat, 24,2 Gew.-% Methacrylsäuremethylester, 19,4 Gew.-% 2-[2-(2-Ethoxyethoxy)ethoxy]ethyl methacrylat und 3,1 Gew.-% N-vinyl-2-pyrrolidon.

2. (Meth)acrylat-Polymer gemäß Anspruch 1, bestehend aus den folgenden Zusammensetzungen:
41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 3-Dimethylaminopropyl methacrylat, M_{w} = 69800 g/mol (GPC);
41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-Dimethylaminoethyl methacrylat, M_{w} = 61200 g/mol (GPC);
41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-(4-Morpholinyl)ethyl methacrylat, M_{w} = 60400 g/mol (GPC);
41,5 Gew.-% Dodecyl-Pentadecylmethacrylat, 25,0 Gew.-% Methacrylsäuremethylester, 30,0 Gew.-% 2-[2-(2-Ethoxyethoxy)ethoxy]ethyl methacrylat und 3,5 Gew.-% 2-(3-Oxazolidinyl)ethyl methacrylat, M_{w} = 78200 g/mol (GPC); und
53,3 Gew.-% Dodecyl-Pentadecylmethacrylat, 24,2 Gew.-% Methacrylsäuremethylester, 19,4 Gew.-% 2-[2-(2-Ethoxyethoxy)ethoxy]ethyl methacrylat und 3,1 Gew.-% N-vinyl-2-pyrrolidon.

3. Schmierölzusammensetzung umfassend mindestens ein polares Grundöl und mindestens ein (Meth)acrylatPolymer gemäß einem der Ansprüche 1 oder 2.

4. Schmierölzusammensetzung gemäß Anspruch 3, **dadurch gekennzeichnet, dass** die Schmierölzusammensetzung 1 bis 30 Gew.-% an (Meth)acrylat-Polymer gemäß einem der Ansprüche 1 oder 2 umfasst.

5. Schmierölzusammensetzung gemäß Anspruch 3, **dadurch gekennzeichnet, dass** die Schmierölzusammensetzung 2 bis 25 Gew.-% an (Meth)acrylat-Polymer gemäß einem der Ansprüche 1 oder 2 umfasst.

6. Schmierölzusammensetzung gemäß Anspruch 3, 4 oder 5, **dadurch gekennzeichnet, dass** das polare Grundöl mindestens ein Polyalkylenglykol umfasst.

7. Verwendung von (Meth)acrylat-Polymeren gemäß einem der Ansprüche 1 oder 2 zur Verbesserung des Viskositätsindexes von Schmierölzusammensetzungen, die mindestens ein polares Grundöl umfassen.

8. Verwendung von (Meth)acrylat-Polymeren gemäß Anspruch 2 als Dispergiermittel in Schmierölzusammensetzungen, die mindestens ein polares Grundöl umfassen.

9. Verfahren zur Herstellung von (Meth)acrylat-Polymeren gemäß einem der Ansprüche 1 oder 2, **dadurch gekennzeichnet, dass** eine Mischung umfassend die jeweiligen Monomere radikalisch polymerisiert wird.

10. Verfahren gemäß Anspruch 9, **dadurch gekennzeichnet, dass** die Polymerisation in einem Esteröl erfolgt.

## Claims

1. (Meth)acrylate polymer for improving the viscosity index, consisting of the following compositions:
(1) 45.0% by weight of dodecyl-pentadecyl methacrylate, 25.0% by weight of methyl methacrylate and 30.0% by weight of 2-[2-(2-ethoxyethoxy)ethoxy]ethyl methacrylate, M_{w} = 69800 g/mol (GPC);
(2) 35.0% by weight of dodecyl-pentadecyl methacrylate, 25.0% by weight of methyl methacrylate and 40.0% by weight of 2-[2-(2-ethoxyethoxy)ethoxy]ethyl methacrylate, M_{w} = 77500 g/mol (GPC);
(3) 15.0% by weight of dodecyl-pentadecyl methacrylate, 25.0% by weight of methyl methacrylate and 60.0% by weight of 2-[2-(2-ethoxyethoxy)ethoxy]ethyl methacrylate, M_{w} = 77800 g/mol (GPC);
(4) 41.5% by weight of dodecyl-pentadecyl methacrylate, 25.0% by weight of methyl methacrylate, 30.0% by weight of 2-[2-(2-ethoxyethoxy)ethoxy]ethyl methacrylate and 3.5% by weight of 3-dimethylaminopropyl methacrylate, M_{w} = 69800 g/mol (GPC);
(5) 41.5% by weight of dodecyl-pentadecyl methacrylate, 25.0% by weight of methyl methacrylate, 30.0% by weight of 2-[2-(2-ethoxyethoxy)ethoxy]ethyl methacrylate and 3.5% by weight of 2-dimethylaminoethyl methacrylate, M_{w} = 61200 g/mol (GPC);
(6) 41.5% by weight of dodecyl-pentadecyl methacrylate, 25.0% by weight of methyl methacrylate, 30.0% by weight of 2-[2-(2-ethoxyethoxy)ethoxy]ethyl methacrylate and 3.5% by weight of 2-(4-morpholinyl)ethyl methacrylate, M_{w} = 60400 g/mol (GPC);
(7) 41.5% by weight of dodecyl-pentadecyl methacrylate, 25.0% by weight of methyl methacrylate, 30.0% by weight of 2-[2-(2-ethoxyethoxy)ethoxy]ethyl methacrylate and 3.5% by weight of 2-(3-oxazolidinyl)ethyl methacrylate, M_{w} = 78200 g/mol (GPC);
(8) 41.5% by weight of dodecyl-pentadecyl methacrylate, 25.0% by weight of methyl methacrylate and 33.5% by weight of 2-[2-(2-ethoxyethoxy)ethoxy]ethyl methacrylate, M_{w} = 79000 g/mol (GPC);
(9) 35.0% by weight of dodecyl-pentadecyl methacrylate, 5.0% by weight of methyl methacrylate and 60.0% by weight of 2-[2-(2-ethoxyethoxy)ethoxy]ethyl methacrylate, M_{w} = 83900 g/mol (GPC);
(10) 65.0% by weight of dodecyl-pentadecyl methacrylate, 5.0% by weight of methyl methacrylate and 30.0% by weight of 2-[2-(2-ethoxyethoxy)ethoxy]ethyl methacrylate, M_{w} = 67000 g/mol (GPC); and
(11) 53.3% by weight of dodecyl-pentadecyl methacrylate, 24.2% by weight of methyl methacrylate, 19.4% by weight of 2-[2-(2-ethoxyethoxy)ethoxy]ethyl methacrylate and 3.1% by weight of N-vinyl-2-pyrrolidone.

2. (Meth)acrylate polymer according to Claim 1, consisting of the following compositions:
41.5% by weight of dodecyl-pentadecyl methacrylate, 25.0% by weight of methyl methacrylate, 30.0% by weight of 2-[2-(2-ethoxyethoxy)ethoxy]ethyl methacrylate and 3.5% by weight of 3-dimethylaminopropyl methacrylate, M_{w} = 69800 g/mol (GPC);
41.5% by weight of dodecyl-pentadecyl methacrylate, 25.0% by weight of methyl methacrylate, 30.0% by weight of 2-[2-(2-ethoxyethoxy)ethoxy]ethyl methacrylate and 3.5% by weight of 2-dimethylaminoethyl methacrylate, M_{w} = 61200 g/mol (GPC);
41.5% by weight of dodecyl-pentadecyl methacrylate, 25.0% by weight of methyl methacrylate, 30.0% by weight of 2-[2-(2-ethoxyethoxy)ethoxy]ethyl methacrylate and 3.5% by weight of 2-(4-morpholinyl)ethyl methacrylate, M_{w} = 60400 g/mol (GPC);
41.5% by weight of dodecyl-pentadecyl methacrylate, 25.0% by weight of methyl methacrylate, 30.0% by weight of 2-[2-(2-ethoxyethoxy)ethoxy]ethyl methacrylate and 3.5% by weight of 2-(3-oxazolidinyl)ethyl methacrylate, M_{w} = 78200 g/mol (GPC); and
53.3% by weight of dodecyl-pentadecyl methacrylate, 24.2% by weight of methyl methacrylate, 19.4% by weight of 2-[2-(2-ethoxyethoxy)ethoxy]ethyl methacrylate and 3.1% by weight of N-vinyl-2-pyrrolidone.

3. Lubricating oil composition comprising at least one polar base oil and at least one (meth)acrylate polymer according to either of Claims 1 and 2.

4. Lubricating oil composition according to Claim 3, **characterized in that** the lubricating oil composition comprises 1% to 30% by weight of (meth)acrylate polymer according to either of Claims 1 and 2.

5. Lubricating oil composition according to Claim 3, **characterized in that** the lubricating oil composition comprises 2% to 25% by weight of (meth)acrylate polymer according to either of Claims 1 and 2.

6. Lubricating oil composition according to Claim 3, 4 or 5, **characterized in that** the polar base oil comprises at least one polyalkylene glycol.

7. Use of (meth)acrylate polymers according to either of Claims 1 and 2 for improving the viscosity index of lubricating oil compositions which comprise at least one polar base oil.

8. Use of (meth)acrylate polymers according to Claim 2 as dispersants in lubricating oil compositions which comprise at least one polar base oil.

9. Process for preparing (meth)acrylate polymers according to either of Claims 1 and 2, **characterized in that** a mixture comprising the respective monomers is radically polymerized.

10. Process according to Claim 9, **characterized in that** the polymerization takes place in an ester oil.

## Revendications

1. Polymère de (méth)acrylate pour l'amélioration de l'indice de viscosité, constitué par les compositions suivantes :
(1) 45,0 % en poids de pentadécylméthacrylate de dodécyle, 25,0 % en poids de méthacrylate de méthyle et 30,0 % en poids de méthacrylate de 2-[2-(2-éthoxyéthoxy)éthoxy]éthyle, M_{w} = 69 800 g/mole (CPG) ;
(2) 35,0 % en poids de pentadécylméthacrylate de dodécyle, 25,0 % en poids de méthacrylate de méthyle et 40,0 % en poids de méthacrylate de 2-[2-(2-éthoxyéthoxy)éthoxy]éthyle, M_{w} = 77 500 g/mole (CPG) ;
(3) 15,0 % en poids de pentadécylméthacrylate de dodécyle, 25,0 % en poids de méthacrylate de méthyle et 60,0 % en poids de méthacrylate de 2-[2-(2-éthoxyéthoxy)éthoxy]éthyle, M_{w} = 77 800 g/mole (CPG) ;
(4) 41,5 % en poids de pentadécylméthacrylate de dodécyle, 25,0 % en poids de méthacrylate de méthyle et 30,0 % en poids de méthacrylate de 2-[2-(2-éthoxyéthoxy)éthoxy]éthyle et 3,5 % en poids de méthacrylate de 3-diméthylaminopropyle, M_{w} = 69 800 g/mole (CPG) ;
(5) 41,5 % en poids de pentadécylméthacrylate de dodécyle, 25,0 % en poids de méthacrylate de méthyle et 30,0 % en poids de méthacrylate de 2-[2-(2-éthoxyéthoxy)éthoxy]éthyle et 3,5 % en poids de méthacrylate de 2-diméthylaminoéthyle, M_{w} = 61 200 g/mole (CPG) ;
(6) 41,5 % en poids de pentadécylméthacrylate de dodécyle, 25,0 % en poids de méthacrylate de méthyle et 30,0 % en poids de méthacrylate de 2-[2-(2-éthoxyéthoxy)éthoxy]éthyle et 3,5 % en poids de méthacrylate de 2-(4-morpholinyl)éthyle, M_{w} = 60 400 g/mole (CPG) ;
(7) 41,5 % en poids de pentadécylméthacrylate de dodécyle, 25,0 % en poids de méthacrylate de méthyle et 30,0 % en poids de méthacrylate de 2-[2-(2-éthoxyéthoxy)éthoxy]éthyle et 3,5 % en poids de méthacrylate de 2-(3-oxazolidinyl)éthyle, M_{w} = 78 200 g/mole (CPG) ;
(8) 41,5 % en poids de pentadécylméthacrylate de dodécyle, 25,0 % en poids de méthacrylate de méthyle et 33,5 % en poids de méthacrylate de 2-[2-(2-éthoxyéthoxy)éthoxy]éthyle, M_{w} = 79 000 g/mole (CPG) ;
(9) 35,0 % en poids de pentadécylméthacrylate de dodécyle, 5,0 % en poids de méthacrylate de méthyle et 60,0 % en poids de méthacrylate de 2-[2-(2-éthoxyéthoxy)éthoxy]éthyle, M_{w} = 83 900 g/mole (CPG) ;
(10) 65,0 % en poids de pentadécylméthacrylate de dodécyle, 5,0 % en poids de méthacrylate de méthyle et 30,0 % en poids de méthacrylate de 2-[2-(2-éthoxyéthoxy)éthoxy]éthyle, M_{w} = 67 000 g/mole (CPG) ; et
(11) 53,3 % en poids de pentadécylméthacrylate de dodécyle, 24,2 % en poids de méthacrylate de méthyle, 19,4 % en poids de méthacrylate de 2-[2-(2-éthoxyéthoxy)éthoxy]éthyle et 3,1 % en poids de N-vinyl-2-pyrrolidone.

2. Polymère de (méth)acrylate selon la revendication 1, constitué des compositions suivantes :
41,5 % en poids de pentadécylméthacrylate de dodécyle, 25,0 % en poids de méthacrylate de méthyle, 30,0 % en poids de méthacrylate de 2-[2-(2-éthoxyéthoxy)éthoxy]éthyle et 3,5 % en poids de méthacrylate de 3-diméthylaminopropyle, M_{w} = 69 800 g/mole (CPG) ;
41,5 % en poids de pentadécylméthacrylate de dodécyle, 25,0 % en poids de méthacrylate de méthyle, 30,0 % en poids de méthacrylate de 2-[2-(2-éthoxyéthoxy)éthoxy]éthyle et 3,5 % en poids de méthacrylate de 2-diméthylaminoéthyle, M_{w} = 61 200 g/mole (CPG) ;
41,5 % en poids de pentadécylméthacrylate de dodécyle, 25,0 % en poids de méthacrylate de méthyle, 30,0 % en poids de méthacrylate de 2-[2-(2-éthoxyéthoxy)éthoxy]éthyle et 3,5 % en poids de méthacrylate de 2-(4-morpholinyl)éthyle, M_{w} = 60 400 g/mole (CPG) ;
41,5 % en poids de pentadécylméthacrylate de dodécyle, 25,0 % en poids de méthacrylate de méthyle, 30,0 % en poids de méthacrylate de 2-[2-(2-éthoxyéthoxy)éthoxy]éthyle et 3,5 % en poids de méthacrylate de 2-(3-oxazolidinyl)éthyle, M_{w} = 78 200 g/mole (CPG) ; et
53,3 % en poids de pentadécylméthacrylate de dodécyle, 24,2 % en poids de méthacrylate de méthyle, 19,4 % en poids de méthacrylate de 2-[2-(2-éthoxyéthoxy)éthoxy]éthyle et 3,1 % en poids de N-vinyl-2-pyrrolidone.

3. Composition d'huile lubrifiante comprenant au moins une huile polaire de base et au moins un polymère de (méth)acrylate selon l'une quelconque des revendications 1 et 2.

4. Composition d'huile lubrifiante selon la revendication 3, **caractérisée en ce que** la composition d'huile lubrifiante comprend 1 à 30 % en poids de polymère de (méth)acrylate selon l'une quelconque des revendications 1 et 2.

5. Composition d'huile lubrifiante selon la revendication 3, **caractérisée en ce que** la composition d'huile lubrifiante comprend 2 à 25 % en poids de polymère de (méth)acrylate selon l'une quelconque des revendications 1 et 2.

6. Composition d'huile lubrifiante selon la revendication 3, 4 ou 5, **caractérisée en ce que** l'huile polaire de base comprend au moins un polyalkylèneglycol.

7. Utilisation de polymères de (méth)acrylate selon l'une quelconque des revendications 1 et 2 pour l'amélioration de l'indice de viscosité de compositions d'huile lubrifiante, qui comprennent au moins une huile polaire de base.

8. Utilisation de polymères de (méth)acrylate selon la revendication 2, en tant qu'agent dispersant dans des compositions d'huile lubrifiante, qui comprennent au moins une huile polaire de base.

9. Procédé pour la préparation de polymères de (méth)acrylate selon l'une quelconque des revendications 1 et 2, **caractérisé en ce qu'**un mélange comprenant les monomères respectifs est polymérisé de manière radicalaire.

10. Procédé selon la revendication 9, **caractérisé en ce que** la polymérisation est réalisée dans une huile d'ester.
